# DEMANDE DE BREVET EUROPEEN

(11) **EP 1 215 427 A1**
(43) Date de publication de la demande: **19.06.2002**
(21) Numéro de dépôt: 00870298.7
(22) Date de dépôt: 13.12.2000
(51) Int. Cl.: F16K 15/02

(54) **Soupape telle qu'une soupape à clapet**

(71) Demandeur: Techspace Aero S.A., 4041 Herstal (BE)
(72) Inventeur: Meurant, Karin, 4250 Geer (BE); Dubuisson, Raymond, 4801 Stembert (BE); Nassen, Rolf, 3700 Tongres (BE)
(74) Mandataire: Van Malderen, Joelle

(57) **Abrégé**

La présente invention se rapporte à une soupape à clapet (10) comportant un siège (2), un clapet associé à au moins une bague de guidage (6,6'), un ressort de rappel (4), des moyens d'appui (7) pour ledit ressort et un joint d'étanchéité (13), caractérisée en ce que le clapet fait office de joint d'étanchéité (13).

## Description

### Objet de l'invention

La présente invention se rapporte à une soupape telle qu'une soupape à clapet dont le dispositif d'étanchéité associe les fonctions d'étanchéité, de guidage, d'appui de ressort et de calibrage du débit passant.

En particulier, l'invention est destinée à toute soupape, pour autant que l'on définisse un matériau de soupape compatible avec le fluide utilisé ainsi que les exigences d'étanchéité correspondantes.

### Etat de la technique

On connaît des solutions classiques de soupape à clapet métallique associé à un étanchement par joint polymère.

Dans un premier exemple, le clapet métallique s'appuie uniquement sur le joint à la fermeture du clapet. Le joint est disposé en position statique sur le siège du clapet.

Dans un deuxième exemple, le joint polymère est incorporé, voire incrusté, dans le clapet métallique. Il assure l'étanchéité avec le siège uniquement à la fermeture du clapet.

Ces deux solutions de l'état de la technique présentent donc un dispositif d'étanchéité comprenant plusieurs pièces : le joint polymère, le système de guidage, le ressort, etc.

Dans ce type de configuration, le diamètre de la zone d'étanchéité est nécessairement plus grand que celui de la zone de passage du fluide, ce qui implique la nécessité d'avoir un ressort puissant. Plus le diamètre du joint est grand, plus l'effort du fluide sur le clapet est grand.

### Buts de l'invention

La présente invention vise à fournir une solution ne présentant pas les inconvénients de l'état de la technique.

Un but complémentaire de l'invention est de réduire la complexité du dispositif d'étanchéité pour une soupape telle qu'une soupape à clapet.

Un autre but est de fournir une réduction du dimensionnement du ressort.

Un autre but est de fournir une réduction de la masse totale de la soupape.

Enfin, un but encore complémentaire est de fournir une solution de faible coût, en comparaison avec l'état de la technique.

### Principaux éléments caractéristiques de l'invention

La présente invention se rapporte à une soupape à clapet comportant un siège, un clapet associé à au moins une bague de guidage, un ressort de rappel, des moyens d'appui pour ledit ressort et un joint d'étanchéité, caractérisée en ce que le clapet fait office de joint d'étanchéité.

Avantageusement, le clapet est réalisé en une seule pièce incorporant la ou les bagues de guidage et les moyens d'appui du ressort de rappel.

De manière avantageuse, la pièce unique qui constitue le clapet est réalisée en matériau polymère, de préférence le PCTFE.

De préférence, ladite pièce unique présente au moins un orifice calibré d'écoulement du fluide.

Avantageusement, la partie de ladite pièce unique faisant face audit siège est de forme conique, et l'étanchéité est réalisée, lorsque ladite soupape est en position fermée, par le contact de la surface conique de ladite pièce unique avec ledit siège selon une arête circulaire ou torique.

### Brève description des figures

La figure 1 représente une vue en coupe d'une première forme d'exécution d'un dispositif de joint de soupape selon l'état de la technique.

La figure 2 représente une vue en coupe d'une deuxième forme d'exécution d'un dispositif de joint de soupape selon l'état de la technique.

La figure 3 représente une vue en coupe d'un dispositif de joint de soupape selon la présente invention.

La figure 4 représente une vue de détail du joint selon l'invention correspondant à la figure 3.

### Description d'une forme d'exécution préférée de l'invention

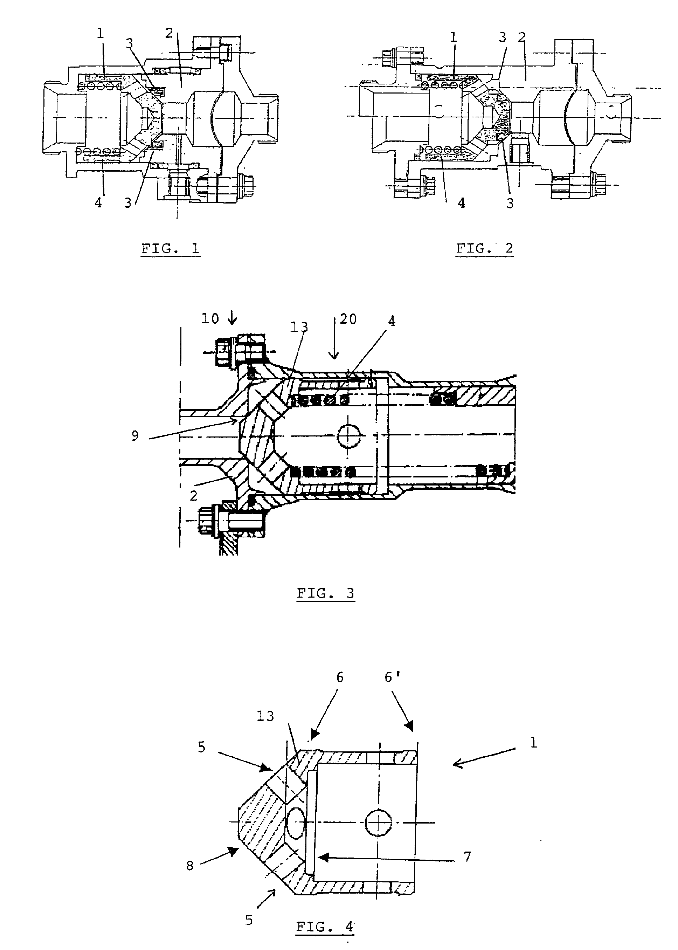

Les figures 1 et 2 représentent deux formes d'exécution d'un dispositif de joint de soupape présentant un joint selon l'état de la technique.

A la figure 1, lorsque la soupape est fermée, le clapet métallique 1 s'appuie sur le siège 2, l'étanchéité étant assurée par le joint polymère 3. Ce dernier est disposé en position statique dans une rainure pratiquée dans le siège 2.

A la figure 2, le clapet 1 est usiné pour permettre l'incorporation du joint polymère 3. Ce dernier est en contact avec le siège 2 uniquement lorsque la soupape est fermée.

A la figure 3, on a représenté une soupape 10 de sécurité telle qu'une soupape à clapet présentant un siège 2, un ressort de rappel 4 et un dispositif d'étanchéité 13 qui, selon l'invention, fait également office de clapet.

Dans cette soupape, le dispositif d'étanchéité qui sert de joint 13 est réalisé en un matériau polymère. Il est donc réalisé en une seule pièce et comporte des excroissances qui servent de bagues de guidage 6,6'. Il comprend également une pièce d'appui 7 du ressort de rappel 4, comme illustré à la figure 4.

Le dispositif 13 présente par ailleurs des orifices calibrés 5 permettant l'écoulement du fluide lorsque la soupape est ouverte.

Le problème de maintien du ressort 4 a été analysé par la Demanderesse. Il a été vérifié, aussi bien par calculs que par essais, qu'aucune pièce intermédiaire n'est nécessaire dans l'application présente, le ressort 4 réalisé permettant un bon centrage de l'effort. De plus, la matière polymère choisie est suffisamment résistante pour transmettre l'effort de fermeture du ressort.

Les orifices 5 dans le joint sont réalisés à un diamètre et une inclinaison optimisés afin de rencontrer les exigences de débit et fermeture de la soupape. La pression amont lors de la refermeture est en effet directement liée à la perte de charge résultant du débit. De plus, afin de conserver des pièces simples, la zone aval ne comporte aucune mise à la pression ambiante. La pression aval est donc déterminée par le débit et la perte de charge des lignes en aval de la soupape. Ces lignes ont été modélisées pour l'optimisation des orifices dans le clapet.

Etant donné la matière choisie, le cône 8 du joint est rapidement marqué par l'arête torique 9 sur laquelle il repose. Quelques activations de rodage sont de préférence réalisées avant mise en fonctionnement normal.

Les avantages de l'invention sur l'état de la technique sont les suivants :
- la soupape se ramène à seulement quatre pièces : clapet faisant fonction de joint 13, corps 20, siège 2, ressort 4 ;
- la masse totale de la soupape est réduite grâce à la suppression de pièces métalliques, ce qui constitue un avantage très important dans le domaine aérospatial par exemple ;
- les composants individuels sont des pièces de révolution simples de faible coût ne présentant aucun chemin d'écoulement secondaire ni équipement de réglage de la pression de fermeture.

## Revendications

1. Soupape à clapet (10) comportant un siège (2), un clapet associé à au moins une bague de guidage (6,6'), un ressort de rappel (4), des moyens d'appui (7) pour ledit ressort et un joint d'étanchéité (13), **caractérisée en ce que** le clapet fait office de joint d'étanchéité (13).

2. Soupape selon la revendication 1, **caractérisée en ce que** le clapet est réalisé en une seule pièce incorporant la ou les bagues de guidage (6,6') et les moyens d'appui (7) du ressort de rappel (4).

3. Soupape selon la revendication 1 ou 2, **caractérisée en ce que** ladite pièce unique qui constitue le clapet est réalisée en matériau polymère, de préférence le PCTFE.

4. Soupape selon l'une quelconque des revendications précédentes, **caractérisée en ce que** ladite pièce unique présente au moins un orifice calibré (5) d'écoulement du fluide.

5. Soupape selon l'une quelconque des revendications précédentes, **caractérisée en ce que** la partie de ladite pièce unique faisant face audit siège (2) est de forme conique (8).

6. Soupape selon la revendication 5, **caractérisée en ce que** l'étanchéité est réalisée, lorsque ladite soupape est en position fermée, par le contact de la surface conique (8) de ladite pièce unique (13) avec ledit siège (2) selon une arête circulaire ou torique (9).
